# FASCICULE DE BREVET EUROPEEN

(11) **EP 3 060 066 B1**
(45) Date de publication et mention de la délivrance du brevet: **08.01.2020**
(21) Numéro de dépôt: 14792440.1
(22) Date de dépôt: 24.10.2014
(51) Int. Cl.: A23D 9/007, A23D 9/013, C11B 5/00

(54) **COMPOSITION ANTIOXYDANTE DESTINÉE À LA STABILISATION OXYDATIVE DES HUILES MARINES, ANIMALES OU VÉGÉTALES**
ANTIOXIDATIONSZUSAMMENSETZUNG FÜR OXIDATIVE STABILISIERUNG MEERES-, PFLANZEN- ODER TIERISCHEN ÖLEN
ANTIOXIDANT COMPOSITION INTENDED FOR OXIDATIVE STABILISATION OF MARINE, ANIMAL OR PLANT OILS

(30) Priorité: 24.10.2013 FR 1360376
(43) Date de publication de la demande: 31.08.2016
(73) Titulaire: Polaris, 29000 Quimper (FR)
(72) Inventeur: BRETON, Gildas, F-29170 Pleuven (FR); LOZACHMEUR, Stéphane, F-29170 Pleuven (FR); LENNON, Benoît, F-29170 Pleuven (FR)
(74) Mandataire: Cabinet Le Guen Maillet
(86) Numéro de dépôt international: PCT/EP2014/072839
(87) Numéro de publication internationale: WO 2015/059270

(56) Documents cités:
- US-A- 5 077 069
- US-A- 5 084 289
- US-A- 5 498 434
- US-A1- 2007 141 223
- STEPHAN DRUSCH ET AL: "Efficient stabilization of bulk fish oil rich in long-chain polyunsaturated fatty acids", EUROPEAN JOURNAL OF LIPID SCIENCE AND TECHNOLOGY, vol. 110, no. 4, 1 avril 2008 (2008-04-01) , pages 351-359, XP055124061, ISSN: 1438-7697, DOI: 10.1002/ejlt.200700195
- SERFERT Y ET AL: "Chemical stabilisation of oils rich in long-chain polyunsaturated fatty acids during homogenisation, microencapsulation and storage", FOOD CHEMISTRY, ELSEVIER LTD, NL, vol. 113, no. 4, 15 avril 2009 (2009-04-15), pages 1106-1112, XP025674919, ISSN: 0308-8146, DOI: 10.1016/J.FOODCHEM.2008.08.079 [extrait le 2008-09-02]
- YANISHLIEVA N V ET AL: "NATURAL ANTIOXIDANTS FROM HERBS AND SPICES", EUROPEAN JOURNAL OF LIPID SCIENCE AND TECHNOLOGY, WILEY VCH VERLAG, WEINHEIM, DE, vol. 108, 1 janvier 2006 (2006-01-01), pages 776-793, XP001245886, ISSN: 1438-7697, DOI: 10.1002/EJLT.200600127
- YANISHLIEVA N V ET AL: "STABILISATION OF EDIBLE OILS WITH NATURAL ANTIOXIDANTS", EUROPEAN JOURNAL OF LIPID SCIENCE AND TECHNOLOGY, WILEY VCH VERLAG, WEINHEIM, DE, vol. 103, no. 11, 1 novembre 2001 (2001-11-01), pages 752-767, XP001080680, ISSN: 1438-7697, DOI: 10.1002/1438-9312(200111)103:11<752::AID-E JLT752>3.3.CO;2-S
- HOPIA A I ET AL: "EFFECT OF DIFFERENT LIPID SYSTEMS ON ANTIOXIDANT ACTIVITY OF ROSEMARY CONSTITUENTS CARNOSOL AND CARNOSIC ACID WITH AND WITHOUT ALPHA-TOCOPHEROL", JOURNAL OF AGRICULTURAL AND FOOD CHEMISTRY, AMERICAN CHEMICAL SOCIETY, US, vol. 44, no. 8, 1 janvier 1996 (1996-01-01), pages 2030-2036, XP001079580, ISSN: 0021-8561, DOI: 10.1021/JF950777P
- ZHANG Y ET AL: "Oxidative stability of sunflower oil supplemented with carnosic acid compared with synthetic antioxidants during accelerated storage", FOOD CHEMISTRY, ELSEVIER LTD, NL, vol. 118, no. 3, 1 février 2010 (2010-02-01), pages 656-662, XP026563884, ISSN: 0308-8146, DOI: 10.1016/J.FOODCHEM.2009.05.038 [extrait le 2009-05-18]

## Description

La présente invention concerne une composition antioxydante destinée à la stabilisation oxydative des huiles marines, animales ou végétales, notamment celles riches en acides gras polyinsaturés.

Différents mécanismes chimiques sont responsables de l'oxydation des huiles alimentaires durant leur élaboration ou leur stockage. Ce sont les lipides des huiles qui sont les sujets de cette oxydation.

Le phénomène d'oxydation est complexe mais implique notamment la fixation de l'oxygène sur les doubles liaisons des acides gras insaturés. Il s'en suit la formation de dérivés réactifs oxygénés, de péroxydes et d'hydropéroxydes, des composés instables à l'origine de l'apparition de molécules de type aldéhyde, alcool et cétone.

L'oxydation participe ainsi à la dégradation des huiles en affectant ses propriétés organoleptiques et nutritionnelles. Ces altérations se traduisent sur le plan organoleptique par une modification de l'odeur, du goût et même de l'huile. Sur le plan qualitatif, une huile dégradée participe au développement de pathologies telles que des cancers, des allergies ou des maladies cardiaques.

Le phénomène d'oxydation est amplifié par l'aération des huiles résultant des ouvertures des produits les contenant, ou encore par la lumière et la température. De plus, des facteurs intrinsèques tels que le taux d'acides gras polyinsaturés font partie des facteurs favorisant l'oxydation. Plus la teneur en acides gras polyinsaturés dans une huile est importante, plus celle-ci est sensible à l'oxydation.

A titre d'exemple, les huiles d'origine marine, telles que les huiles de poissons, sont riches en acides gras oméga-3 tels que l'acide eicosapentanoïque (EPA) ou l'acide docosapentanoïque (DHA). Ceux-ci sont aujourd'hui bien connus pour leurs effets bénéfiques sur la santé humaine. Or, l'utilisation de ces huiles est limitée en alimentation du fait de leur sensibilité trop importante à l'oxydation.

Afin de pallier ce problème, des composés antioxydants ont été identifiés et des compositions antioxydantes ont été développées. Les composés antioxydants interviennent dans les chaînes d'oxydation des lipides en donnant un atome d'hydrogène ou un électron. Par exemple, des antioxydants synthétiques, tels que le butylhydroxyanisol (BHA) et le butylhydroxytoluène (BHT) ont été proposés. Or, de nos jours, les consommateurs sont dans l'attente de produits d'origine naturelle, considérés comme bien meilleurs pour la santé. Les recherches se sont alors concentrées sur la découverte de composés antioxydants d'origine naturelle.

Les sources de composés antioxydants naturels sont nombreuses. Il peut s'agir par exemple d'huiles ou de végétaux. A titre d'exemple de tels composés, on citera le tocophérol, l'acide ascorbique, les caroténoïdes, les acides phénoliques tels que l'acide carnosique ou l'acide rosmarinique, les flavonoïdes ou les catéchines.

L'action antioxydante de ces composés dans des huiles à stabiliser est surtout efficace lorsqu'ils sont ajoutés en combinaison. Il a été observé un effet de synergie pour certaines combinaisons de composés antioxydants telles que la combinaison de tocophérol, d'acide ascorbique et de lécithine pour stabiliser une huile de poisson.

La lécithine est souvent utilisée en tant qu'antioxydant. Le terme lécithine désigne un mélange de composés phospolipidiques, de triglycérides, de glucides et de glycolipides. Malheureusement, on a observé qu'une fois ajoutée dans une huile, la lécithine ne permet pas d'obtenir un mélange homogène et a tendance à former des dépôts au fond du contenant. Dans une telle situation, la lécithine ne peut jouer son rôle d'antioxydant.

Le document US 2007/0141223 décrit ainsi une composition antioxydante destinée à stabiliser des huiles comprenant des phospholipides en combinaison avec des composés tels que les tocophérols, le palmitate d'ascorbyle ou l'extrait de romarin.

Un des buts de la présente invention est de proposer une composition antioxydante qui ne présente pas les inconvénients précités, en particulier qui ne forme pas de dépôts et qui soit efficace pour retarder l'oxydation des lipides d'une huile dans laquelle la composition est ajoutée.

A cet effet, la présente invention concerne une composition antioxydante destinée à stabiliser des huiles face à l'oxydation, la composition selon l'invention comprenant (a) un mélange composé essentiellement de phospholipides et (b) au moins un autre composé antioxydant, et se caractérise en ce que le mélange (a) composé essentiellement de phospholipides présente:
- une teneur en phospholipides totaux supérieure ou égale à 85%,
- une teneur en phosphatidylcholine supérieure ou égale 40%,
- une teneur en glucides et glycolipides inférieure ou égale à 8%,
en poids par rapport au poids total dudit mélange.

Selon un mode de réalisation préféré de l'invention, le composé antioxydant (b), autre que le mélange (a), est l'acide carnosique.

Il a été, en effet, mis en évidence dans le cadre de l'invention et comme le démontreront les exemples qui suivent, que le mélange (a) de phospholipides selon l'invention, riche en phosphatidylcholine, combiné à l'acide carnosique produisait un effet antioxydant synergique.

De manière avantageuse, le mélange (a) composé essentiellement de phospholipides contient des glucides et glycolipides mis en quantité inférieure ou égale à 8%. De même, le mélange (a) peut comprendre à titre de phospholipides d'autres phospholipides que la phosphatidylcholine, tant que la teneur en phosphatidylcholine est supérieure ou égale 40%.

La société déposante a ainsi mis en évidence que la teneur en phosphatidylcholine dans le mélange composé essentiellement de phospholipides était déterminante pour obtenir une composition qui ne forme pas de dépôt dans l'huile dans laquelle elle est ajoutée. En outre, le maintien des quantités de glucides et de glycolipides en dessous d'un certain seuil contribue également à inhiber les dépôts et les déphasages dans l'huile.

Au sens de l'invention, l'autre composé antioxydant (b) auquel est associé le mélange (a) (composé essentiellement de phospholipides) n'est pas lui-même un phospholipide.

Préférentiellement, le mélange composé essentiellement de phospholipides présente:
- une teneur en phospholipides totaux supérieure ou égale à 90%,
- une teneur en phosphatidylcholine supérieure ou égale 50%, préférentiellement supérieure ou égale à 60%,
- une teneur en glucides et glycolipides inférieure ou égale à 5%,
les teneurs étant exprimées en poids par rapport au poids total dudit mélange.

La composition comprend donc, en plus dudit mélange (a) composé essentiellement de phospolipides, au moins un composé antioxydant (b) qui est choisi parmi : un acide phénolique, tel que l'acide carnosique ou l'acide rosmarinique, un phénol tel que le carnosol ou le rosmanol, un composé tocophérol ou dérivé du tocophérol, l'acide ascorbique ou un dérivé de l'acide ascorbique tel que le palmitate d'ascorbyle, un polyphénol extrait de plante tel que le thé vert, ou tout autre composé antioxydant d'origine naturelle connue.

Le tocophérol, ou vitamine E, utilisé dans le cadre de l'invention peut être de l'alpha-tocophérol, du béta-tocophérol, du gamma-tocophérol ou du delta-tocophérol, ou un mélange quelconque de ces isomères. Des préparations de tocophérol se trouvent couramment dans le commerce. A titre de dérivés du tocophérol, on peut citer les esters tels que l'acétate de tocophérol.

Le palmitate d'ascorbyle est un ester formé entre l'acide ascorbique et l'acide palmitique. Des préparations de palmitate d'ascorbyle ou d'acide ascorbique se trouvent couramment dans le commerce.

Les polyphénols utilisés dans le cadre de l'invention sont libres ou estérifiés et sont préférentiellement extraits de thé vert. Il s'agira préférentiellement de polyphénols ajoutés sous forme d'un extrait de thé vert contenant entre 70 et 80 %, en poids, de catéchines.

Préférentiellement, selon ce mode de réalisation, la composition antioxydante est constituée entre 4 % et 90 %, en poids, dudit mélange (a) de phospholipides et entre 0,25 % et 25%, préférentiellement entre 0,25 % et 10 %, en poids, d'acide carnosique.

Selon un autre mode de réalisation, la composition comprend en plus dudit mélange (a) de phospholipides, en tant qu'autres composés antioxydants (b), de l'acide carnosique et un composé tocophérol ou dérivé du tocophérol.

Préférentiellement selon ce mode de réalisation, la composition antioxydante est constituée entre 4 % et 90 %, en poids, dudit mélange de phospholipides, entre 0,25 % et 25 %, en poids, d'acide carnosique et entre 2 % et 60 %, en poids, de tocophérol ou d'un dérivé.

Selon encore un autre mode de réalisation, la composition comprend en plus dudit mélange de phospholipides, et en tant qu'autres composés antioxydants, de l'acide carnosique, un composé tocophérol et du palmitate d'ascorbyle.

Préférentiellement, selon ce mode de réalisation, la composition antioxydante est composée entre 4 % et 90 %, en poids, dudit mélange de phospholipides, entre 0,25 % et 25 %, en poids, d'acide carnosique, entre 2 % et 60 %, en poids, de tocophérol et entre 0,2 % et 12 %, en poids, de palmitate d'ascorbyle.

L'acide carnosique utilisé dans le cadre de l'invention est avantageusement présent sous forme d'un extrait de romarin (*Rosmarinus officinalis*) titré par exemple entre 4 et 80 % d'acide carnosique, préférentiellement 70%.

La composition selon l'invention peut en outre comprendre tout ingrédient, tel qu'un solvant ou un tensioactif, permettant de rendre, au besoin, un composé antioxydant choisi liposoluble. Cela peut être nécessaire notamment en cas d'utilisation de polyphénols libres extraits de thé vert tels que la catéchine.

La présente invention concerne encore une huile destinée à être stabilisée à l'oxydation et comprenant entre 50 et 20 000 ppm d'une composition antioxydante telle que définie précédemment.

Les huiles destinées à être stabilisées à l'oxydation sont des huiles riches en acides gras polyinsaturés, notamment riches en acides gras oméga-3 ou oméga-6.

L'huile à stabiliser peut être une huile alimentaire, pharmaceutique ou cosmétique. Il peut s'agir d'une huile d'origine végétale, d'une huile d'origine marine telle qu'une huile de poisson ou de micro-algues, ou d'une huile d'origine animale.

La composition antioxydante selon l'invention est ajoutée à l'huile à une concentration massique comprise entre 50 et 20 000 ppm. Le choix de la concentration est guidé par la nature chimique des acides gras de l'huile à stabiliser.

De même, lorsque la composition antioxydante contient de l'acide carnosique sous forme d'extrait de romarin, la quantité de la composition antioxydante ajoutée dépendra du titrage en acide carnosique de l'extrait de romarin.

Selon un mode de réalisation, l'huile comprend entre 40 et 500 ppm d'acide carnosique et entre 900 et 10000 ppm dudit mélange composé essentiellement de phospholipides.

Selon un mode de réalisation, l'huile comprend entre 40 et 500 ppm d'acide carnosique, entre 900 et 10000 ppm dudit mélange composé essentiellement de phospholipides et entre 500 et 5000 ppm de composé tocophérol.

Selon encore un mode de réalisation, l'huile comprend entre 40 et 500 ppm d'acide carnosique et entre 900 et 10000 ppm dudit mélange composé essentiellement de phospholipides, entre 500 et 5000 ppm de composé tocophérol et entre 200 et 2000 ppm de palmitate d'ascorbyle.

Les exemples suivants illustrent l'invention sans pour autant la limiter.

### Mesure de la stabilité oxydative par Test Rancimat réalisé sur des huiles de poisson enrichies en mélanges d'antioxydants et stabilisées par ces mélanges:

A une huile de poisson contenant 18% d'acide eïcosapentaénoïque (EPA) et 12% d'acide docosahexaénoïque (DHA) (huile nommée 1812 TG), à une huile de thon à 25 % de DHA (huile nommée Thon Fless 25 DHA TG) et à une huile de thon à 60 % de DHA (huile nommée 60 DHA TG) ont été ajoutés les composés antioxydants suivants:
- Acide carnosique (Silver Ice ; société Polaris, France) et tocophérol (Oxynat 70IP à 70 % de tocophérol; société POLARIS),
- Acide carnosique et mélange de phospholipides*,
- Acide carnosique et mélange de phospholipides* + palmitate d'ascorbyle,
- Tocophérol et palmitate d'ascorbyle
- Acide carnosique et mélange de phospholipides* + tocophérol,
- Acide carnosique et lécithine de soja + tocophérol + palmitate d'ascorbyle,
- Acide carnosique + tocophérol + palmitate d'ascorbyle,
- Tocophérol.
* Mélange composé essentiellement de phospholipides selon l'invention et comprenant 90 % de phospolipides totaux, 50 % de phosphatydilcholine et moins de 5 % de glucides et de glycolipides (Mélange (a) dans le Tableau 1 suivant).

L'huile est portée à une température de 30°C, puis les antioxydants y sont ajoutés et mélangés sous gaz neutre (Azote ou argon).

### Test Rancimat :

Le test Rancimat (norme ISO 6886) permet de comparer la stabilité de différents corps gras (huiles ou produits contenant des graisses) par la détermination de leur temps de résistance à l'oxydation. La spécification de Ti (Temps d'Induction au test Rancimat, exprimé en heures) correspond au temps pendant lequel la matière grasse a résisté à un stress oxydatif. Le principe du test consiste à vieillir prématurément les matières grasses par décomposition thermique à 98°C, sous un bullage intensif d'air. Les acides organiques, produits de dégradation de cette oxydation poussée, sont entraînés par un courant d'air et recueillis dans une cellule de mesure remplie d'eau distillée. Le temps d'induction est déterminé par conductimétrie et correspond au Ti (Les technologies de laboratoire, n° 2 janvier 2007) (appareil : Rancimat 679 Metrohm).

Les résultats du test Rancimat pour les mélanges antioxydants testés dans les huiles de poisson sont reproduits dans le Tableau 1. Les quantités massiques des composés antioxydants sont exprimées en ppm (en poids par rapport au poids total de l'huile).

Index d'activité = temps d'induction (Ti) huile stabilisée / Temps d'induction (Ti) huile non stabilisée.

**Tableau 1**

| | Antioxydant | | | | | Résultats | |
|---|---|---|---|---|---|---|---|
| Huile | Acide carnosique | Lécithine de tournesol | Mélange (a) | Tocophérols | Palmytate d'ascorbyle | Ti Rancimat | Index d'activité |
| 1812 TG | | | | | | 4,27 | / |
| | | | | 1500 ppm | 750 ppm | 8,9 | 2,1 |
| | 180 ppm | | | | | 12,7 | 3,0 |
| | | | 2500 ppm | | | 7,53 | 1,8 |
| | | | 2500 ppm | 1500 ppm | | 23,4 | |
| | | | 2500 ppm | 1500 ppm | 750 ppm | 35,4 | 8,3 |
| | 180 ppm | | 2500 ppm | | | 36,2 | 8,5 |
| | 180 ppm | | | 1500 ppm | | 18,7 | 4,4 |
| | 180 ppm | | | 1500 ppm | 750 ppm | 24,4 | 6,3 |
| | 180 ppm | 2500 ppm | | 1500 ppm | 750 ppm | 38,5 | 9,9 |
| | 180 ppm | | 2500 ppm | 1500 ppm | | 51,3 | 12,0 |
| | 180 ppm | | 2500 ppm | 1500 ppm | 750 ppm | 91,4 | 21,4 |
| Thon Fless 25DHA TG | | | | 1000 ppm | | 6,6 | / |
| | 180 ppm | | | 1000 ppm | | 8,2 | 1,24 |
| | 180 ppm | | 2500 ppm | 1000 ppm | | 46,2 | 7,00 |
| 60DHA TG | | | | 3000 ppm | | 2,9 | / |
| | 180 ppm | | | 3000 ppm | | 3,1 | 1,07 |
| | 180 ppm | | 2500 ppm | 3000 ppm | | 13,7 | 4,72 |

| | | | | | | | |
|---|---|---|---|---|---|---|---|
| Mélange (a) : mélange selon l'invention composé essentiellement de phospholipides | | | | | | | |

### En ce qui concerne l'huile contenant 18% d'EPA et 12% de DHA (1812 TG), On remarque également si l'on compare les mélanges suivants :

- en l'absence de composés antioxydants : le temps d'induction Ti est de 4,7 heures.
- ajout d'acide carnosique : temps Ti de 12,7 heures.

Ceci prouve un effet antioxydant de l'acide carnosique .
- acide carnosique + mélange de phospholipides selon l'invention contenant plus de 40 % (poids) de phosphatydilcholine : Ti à 36,2 heures.

Il y a bien un effet de synergie concernant la résistance à l'oxydation entre l'acide carnosique et le mélange de phospholipides riches en phosphatydilcholine selon l'invention.
- acide carnosique + tocophérol : Ti de 18,7 heures
- acide carnosique + tocophérol + mélange (a) de phospholipides selon l'invention: Ti de 51,3 donc bien supérieur au Ti relevé pour un même mélange mais sans le mélange de phospholipides selon l'invention. Ceci démontre l'effet de synergie du mélange de phospholipides.
- Tocophérol + mélange (a) de phospholipides selon l'invention: Ti de 23,4 heures.
- Tocophérol + mélange (a) de phospholipides selon l'invention + acide carnosique: Ti de 51,3 heures

Il y a bien un effet de synergie concernant la résistance à l'oxydation entre l'acide carnosique, le tocophérol et le mélange de phospholipides riches en phosphatydilcholine selon l'invention.
- acide carnosique + tocophérol + palmytate d'ascorbyle: Ti de 24,4 heures
- acide carnosique + tocophérol + palmytate d'ascorbyle + mélange (a) de phospholipides selon l'invention: Ti de 91,4 heures

On remarque immédiatement l'effet de synergie s'opérant entre les composants avec l'ajout du mélange (a) selon l'invention puisque le Ti après ajout du mélange (a) est multiplié par près de 4.
- acide carnosique + tocophérol + palmytate d'ascorbyle + lécithine de soja : Ti de 38,5 heures

L'ajout de la lécithine de soja en tant que source de phosphatidylcholine dans un mélange d'acide carnosique, de tocophérol et de palmytate d'ascorbyle a permis d'augmenter le Ti de 24,4 à 38,5. Néanmoins, le mélange selon l'invention procure de bien meilleurs résultats (91,4).

Enfin, on ne remarque aucun dépôt au fond des récipients ni aucun déphasage dans les huiles contenant le mélange (a) de phospholipides contenant plus de 40 % (poids) de phosphatydilcholine. Au contraire un dépôt et déphasage est observé avec l'huile contenant le mélange à base de lécithine de soja. Ceci prouve que le mélange de phospholipides selon l'invention permet non seulement d'obtenir un effet antioxydant bien supérieur à celui obtenu avec la lécithine de soja et que de plus, la stabilité de l'huile est respectée.

### En ce qui concerne l'huile contenant 25% de DHA (Thon Fless 25 DHA TG) :

En l'absence de composés antioxydants, le temps d'induction est de 6,6 heures. Lorsqu'un mélange d'acide carnosique et de tocophérol est ajouté à l'huile, le Ti est prolongé jusqu'à une valeur de 8,2 heures. Lorsqu'un mélange composé d'acide carnosique, de tocophérol et du mélange de phospholipides contenant plus de 40 % (poids) de phosphatydilcholine est présent dans l'huile, alors le Ti est encore prolongé jusqu'à atteindre 46,2 heures. Il y a bien un effet de synergie opéré grâce au mélange de phospholipides riches en phosphatydilcholine. Les mêmes observations sont faites concernant l'huile de poisson à 60% de DHA.

Enfin, on ne remarque aucun dépôt au fond des récipients ni aucun déphasage dans les huiles contenant le mélange de phospholipides contenant plus de 40 % (poids) de phosphatydilcholine.

Des compositions prêtes à être mélangées à des huiles à stabiliser face à l'oxydation peuvent être formulées et stockées en vue d'une utilisation à venir. Par exemple une telle composition peut être formulée comme suit :
- Acide carnosique : 0,25 - 10 % (en poids)
- Mélange de phospholipides contenant plus de 40 % (en poids) de phosphatydilcholine : 4 - 90 % (en poids)

## Revendications

1. Composition antioxydante, destinée à stabiliser des huiles face à l'oxydation, comprenant (a) un mélange composé essentiellement de phospholipides et (b) au moins un autre composé antioxydant, **caractérisée en ce que** ledit composé antioxydant comprend l'acide carnosique et **en ce que** le mélange composé essentiellement de phospholipides (a) présente:
- une teneur en phospholipides totaux supérieure ou égale à 85%,
- une teneur en phosphatidylcholine supérieure ou égale 40%,
- une teneur en glucides et glycolipides inférieure ou égale à 8%,
en poids par rapport au poids total dudit mélange.

2. Composition selon la revendication 1, **caractérisée en ce que** le mélange de phospholipides présente:
- une teneur en phospholipides totaux supérieure ou égale à 90%,
- une teneur en phosphatidylcholine supérieure ou égale 50%,
- une teneur en glucides et glycolipides inférieure ou égale à 5%,
en poids par rapport au poids total dudit mélange.

3. Composition selon la revendication 1 ou 2, **caractérisée en ce que** le ou les composés antioxydants (b) sont choisis parmi : un acide phénolique, tel que l'acide rosmarinique, un phénol tel que le carnosol, un composé tocophérol ou dérivé du tocophérol, l'acide ascorbique ou un dérivé de l'acide ascorbique tel que le palmitate d'ascorbyle, un polyphénol extrait de plante tel que le thé vert ou tout autre composé antioxydant d'origine naturelle connue.

4. Composition selon l'une des revendications précédentes, **caractérisée en ce qu'**elle comprend (a) entre 4 % et 90 %, en poids, dudit mélange composé essentiellement de phospholipides (a) et (b) entre 0,25 % et 25 %, en poids, préférentiellement entre 0,25 % et 10 %, en poids, d'acide carnosique.

5. Composition selon la revendication 3, **caractérisée en ce qu'**elle comprend, en tant qu'autres composés antioxydants (b), un mélange d'acide carnosique et d'un composé tocophérol ou dérivé du tocophérol.

6. Composition selon la revendication 5, **caractérisée en ce qu'**elle comprend entre 4 % et 90 %, en poids, dudit mélange de phospholipides, entre 0,25 % et 25 %, en poids, d'acide carnosique et entre 2 % et 60 %, en poids, de tocophérol.

7. Composition selon la revendication 3, **caractérisée en ce qu'**elle comprend, en tant qu'autres composés antioxydants (b), un mélange d'acide carnosique, d'un composé tocophérol et de palmitate d'ascorbyle.

8. Composition selon la revendication 7, **caractérisée en ce qu'**elle comprend entre 4 % et 90 %, en poids, dudit mélange de phospholipides, entre 0,25 % et 25 %, en poids, d'acide carnosique, entre 2 % et 60 %, en poids, de tocophérol et entre 0,2 % et 12 %, en poids palmitate d'ascorbyle.

9. Composition selon l'une des revendications 1 à 8, **caractérisée en ce que** ledit acide carnosique est présent sous forme d'un extrait de romarin.

10. Composition selon l'une des revendications 1 à 9, **caractérisée en ce que** le mélange composé essentiellement de phospholipides (a) présente:
- une teneur en phospholipides totaux égale à 90%,
- une teneur en phosphatidylcholine égale 50 %,
- une teneur en glucides et glycolipides égale à 5 %,
en poids par rapport au poids total dudit mélange.

11. Huile **caractérisée en ce qu'**elle comprend entre 50 et 20 000 ppm d'une composition antioxydante selon l'une des revendications 1 à 10.

12. Huile selon la revendication 11, **caractérisée en ce qu'**elle est une huile végétale ou une huile d'origine marine.

13. Huile selon l'une des revendications 11 à 12, **caractérisée en ce qu'**elle comprend entre 40 et 500 ppm d'acide carnosique et entre 900 et 10000 ppm dudit mélange de phospholipides.

14. Huile selon l'une des revendications 11 à 12, **caractérisée en ce qu'**elle comprend entre 40 et 500 ppm d'acide carnosique et entre 900 et 10000 ppm dudit mélange de phospholipides et entre 500 et 5000 ppm de composé tocophérol.

15. Huile selon l'une des revendications 11 à 12, **caractérisée en ce qu'**elle comprend entre 40 et 500 ppm d'acide carnosique et entre 900 et 10000 ppm dudit mélange de phospholipides, entre 500 et 5000 ppm de composé tocophérol et entre 200 et 2000 ppm de palmitate d'ascorbyle.

## Patentansprüche

1. Antioxidanszusammensetzung zur Stabilisierung von Ölen vor Oxidation, umfassend (a) eine Mischung, die im Wesentlichen aus Phospholipiden besteht, und (b) mindestens eine andere Antioxidansverbindung, **dadurch gekennzeichnet, dass** die Antioxidansverbindung Carnosolsäure umfasst, und dadurch, dass die im Wesentlichen aus Phospholipiden bestehende Mischung (a) Folgendes aufweist:
- einen Gesamt-Phospholipidgehalt von mehr als oder gleich 85 Gew.-%,
- einen Phosphatidylcholingehalt von mehr als oder gleich 40 Gew.-%,
- einen Gehalt an Kohlenhydraten und Glykolipiden von weniger als oder gleich 8 Gew.-%,
bezogen auf das Gesamtgewicht der Mischung.

2. Zusammensetzung nach Anspruch 1, **dadurch gekennzeichnet, dass** die Mischung von Phospholipiden Folgendes aufweist:
- einen Gesamt-Phospholipidgehalt von mehr als oder gleich 90 Gew.-%,
- einen Phosphatidylcholingehalt von mehr oder gleich 50 Gew.-%,
- einen Gehalt an Kohlenhydraten und Glykolipiden von weniger als oder gleich 5 Gew.-%,
bezogen auf das Gesamtgewicht der Mischung.

3. Zusammensetzung nach Anspruch 1 oder 2, **dadurch gekennzeichnet, dass** die Antioxidansverbindung(en) (b) ausgewählt sind aus: einer Phenolsäure wie Rosmarinsäure, einem Phenol wie Carnosol, einer Tocopherolverbindung oder einem Tocopherolderivat, Ascorbinsäure oder einem Derivat der Ascorbinsäure wie Ascorbylpalmitat, einem aus einer Pflanze wie grünem Tee extrahierten Polyphenol oder eine beliebige andere Antioxidansverbindung bekannten natürlichen Ursprungs.

4. Zusammensetzung nach einem der vorhergehenden Ansprüche, **dadurch gekennzeichnet, dass** sie (a) zwischen 4 und 90 Gew.-% der im Wesentlichen aus Phospholipiden bestehenden Mischung (a) und (b) zwischen 0,25 und 25 Gew.-%, vorzugsweise zwischen 0,25 und 10 Gew.-%, Carnosolsäure umfasst.

5. Zusammensetzung nach Anspruch 3, **dadurch gekennzeichnet, dass** sie als weitere Antioxidansverbindungen (b) eine Mischung von Carnosolsäure und einer Tocopherolverbindung oder einem Tocopherolderivat umfasst.

6. Zusammensetzung nach Anspruch 5, **dadurch gekennzeichnet, dass** sie zwischen 4 und 90 Gew.-% der Mischung von Phospholipiden, zwischen 0,25 und 25 Gew.-% Carnosolsäure und zwischen 2 und 60 Gew.-% Tocopherol umfasst.

7. Zusammensetzung nach Anspruch 3, **dadurch gekennzeichnet, dass** sie als weitere Antioxidansverbindungen (b) eine Mischung von Carnosolsäure, einer Tocopherolverbindung und Ascorbylpalmitat umfasst.

8. Zusammensetzung nach Anspruch 7, **dadurch gekennzeichnet, dass** sie zwischen 4 und 90 Gew.-% der Mischung von Phospholipiden, zwischen 0,25 und 25 Gew.-% Carnosolsäure, zwischen 2 und 60 Gew.-% Tocopherol und zwischen 0,2 und 12 Gew.-% Ascorbylpalmitat umfasst.

9. Zusammensetzung nach einem der Ansprüche 1 bis 8, **dadurch gekennzeichnet, dass** die Carnosolsäure in Form eines Rosmarinextrakts vorliegt.

10. Zusammensetzung nach einem der Ansprüche 1 bis 9, **dadurch gekennzeichnet, dass** die im Wesentlichen aus Phospholipiden bestehende Mischung (a) Folgendes aufweist:
- einen Gesamt-Phospholipidgehalt gleich 90 Gew.-%,
- einen Phosphatidylcholingehalt gleich 50 Gew.-%,
- einen Gehalt an Kohlenhydraten und Glykolipiden gleich 5 Gew.-%,
bezogen auf das Gesamtgewicht der Mischung.

11. Öl, **dadurch gekennzeichnet, dass** es zwischen 50 und 20 000 ppm einer Antioxidanszusammensetzung nach einem der Ansprüche 1 bis 10 umfasst.

12. Öl nach Anspruch 11, **dadurch gekennzeichnet, dass** es ein Pflanzenöl oder ein Öl marinen Ursprungs ist.

13. Öl nach einem der Ansprüche 11 bis 12, **dadurch gekennzeichnet, dass** es zwischen 40 und 500 ppm Carnosolsäure und zwischen 900 und 10000 ppm der Mischung von Phospholipiden umfasst.

14. Öl nach einem der Ansprüche 11 bis 12, **dadurch gekennzeichnet, dass** es zwischen 40 und 500 ppm Carnosolsäure und zwischen 900 und 10000 ppm der Mischung von Phospholipiden und zwischen 500 und 5000 ppm Tocopherolverbindung umfasst.

15. Öl nach einem der Ansprüche 11 bis 12, **dadurch gekennzeichnet, dass** es zwischen 40 und 500 ppm Carnosolsäure und zwischen 900 und 10000 ppm der Mischung von Phospholipiden, zwischen 500 und 5000 ppm Tocopherolverbindung und zwischen 200 und 2000 ppm Ascorbylpalmitat umfasst.

## Claims

1. Antioxidant composition, intended to stabilise oils faced with oxidation, comprising (a) a mixture composed essentially of phospholipids and (b) at least one other antioxidant compound, **characterised in that** said antioxidant compound comprises carnosic acid and **in that** the mixture composed essentially of phospholipids (a) has:
- a total phospholipid content greater than or equal to 85%,
- a phosphatidylcholine content greater than or equal to 40%,
- a glucid and glycolipid content less than or equal to 8%,
by weight with respect to the total weight of said mixture.

2. Composition according to claim 1, **characterised in that** the mixture of phospholipids has:
- a total phospholipid content greater than or equal to 90%,
- a phosphatidylcholine content greater than or equal to 50%,
- a glucid and glycolipid content less than or equal to 5%,
by weight with respect to the total weight of said mixture.

3. Composition according to claim 1 or 2, **characterised in that** the antioxidant compound or compounds (b) are chosen from: a phenolic acid, such as rosmarinic acid, a phenol such as carnosol, a tocopherol compound or derivative of tocopherol, ascorbic acid or a derivative of ascorbic acid such as ascorbyl palmitate, a polyphenol extracted from a plant such as green tea, or any other antioxidant compound of known natural origin.

4. Composition according to one of the preceding claims, **characterised in that** it comprises (a) between 4% and 90% by weight of said mixture composed essentially of phospholipids (a), and (b) between 0.25% and 25% by weight, preferentially between 0.25% and 10% by weight, of carnosic acid.

5. Composition according to claim 3, **characterised in that** it comprises, as other antioxidant compounds (b), a mixture of carnosic acid and a tocopherol compound or derivative of tocopherol.

6. Composition according to claim 5, **characterised in that** it comprises between 4% and 90% by weight of said mixture of phospholipids, between 0.25% and 25% by weight of carnosic acid and between 2% and 60% by weight of tocopherol.

7. Composition according to claim 3, **characterised in that** it comprises, as other antioxidant compounds (b), a mixture of carnosic acid, a tocopherol compound and ascorbyl palmitate.

8. Composition according to claim 7, **characterised in that** it comprises between 4% and 90% weight of said mixture of phospholipids, between 0.25% and 25% by weight of carnosic acid, between 2% and 60% by weight of tocopherol and between 0.2% and 12% by weight of ascorbyl palmitate.

9. Composition according to one of claims 1 to 8, **characterised in that** said carnosic acid is present in the form of an extract of rosemary.

10. Composition according to one of claims 1 to 9, **characterised in that** the mixture composed essentially of phospholipids (a) has:
- a total phospholipid content greater than or equal to 90%,
- a phosphatidylcholine content greater than or equal to 50%,
- a glucid and glycolipid content less than or equal to 5%,
by weight with respect to the total weight of said mixture.

11. Oil, **characterised in that** it comprises between 50 and 20,000 ppm of an antioxidant composition according to one of claims 1 to 10.

12. Oil according to claim 11, **characterised in that** it is a plant oil or an oil of marine origin.

13. Oil according one of claims 11 to 12, **characterised in that** it comprises between 40 and 500 ppm of carnosic acid and between 900 and 10,000 ppm of said mixture of phospholipids.

14. Oil according one of claims 11 to 12, **characterised in that** it comprises between 40 and 500 ppm of carnosic acid and between 900 and 10,000 ppm of said mixture of phospholipids and between 500 and 5000 ppm of tocopherol compound.

15. Oil according one of claims 11 to 14, **characterised in that** it comprises between 40 and 500 ppm of carnosic acid and between 900 and 10,000 ppm of said mixture of phospholipids, between 500 and 5000 ppm of tocopherol compound and between 200 and 2000 ppm of ascorbyl palmitate.
